# EUROPÄISCHE PATENTANMELDUNG

(11) **EP 0 937 391 A1**
(43) Veröffentlichungstag der Anmeldung: **25.08.1999**
(21) Anmeldenummer: 99101764.1
(22) Anmeldetag: 12.02.1999
(51) Int. Cl.: A01L 7/10

(54) **Hufnagel mit ovalem Querschnitt**

(30) Priorität: 17.02.1998 DE 29802725 U
(71) Anmelder: Tiefholz, Heinz, Dipl.-Ing., 90552 Röthenbach / Peg. (DE)
(72) Erfinder: Tiefholz, Heinz, Dipl.-Ing., 90552 Röthenbach / Peg. (DE)

(57) **Zusammenfassung**

Der Schaft eines Hufnagels - also der Teil, der nach dem Einschlagen im Wesentlichen im Huf steckt - hat üblicherweise einen rechteckigen Querschnitt. Der hier beanspruchte Schutz beinhaltet für den Schaft aber auch für den gesamten Hufnagel einen davon abweichenden - also z.B. einen ovalen oder ähnlichen Querschnitt.

## Beschreibung

Entsprechend der Skizze in Anhang besteht ein Hufnagel hauptsächlich aus drei Segmenten: Dem Kopf, dem Schaft und der Spitze. Als Schaft wird üblicherweise der mittlere Teil bezeichnet, der nach des Einschlagen in den Pferdehuf im Horn steckt bzw. dessen ggf. überschüssige Länge nach Bedarf abgeschnitten wird.

Der Querschnitt dieses Schaftes hat bei allen einteiligen Hufnägeln eine rechteckige Geometrie. Diese kann gelegentlich geringfügig von der theoretischen exakt geradlinigen Kontur abweichen, was in erster Linie fertigungsbedingt ist ( Ansicht "a", Anhang 1 ).

Diese alte Form hat einige wesentliche Nachteile:
Das Loch, das sich beim Einschlagen im Huf bildet, ist keineswegs ebenfalls rechteckig sondrn mehr oder weniger oval. Das hat hauptsächlich zwei Folgen:
1.) Die Führungskräfte zwischen Hufnagel und dem Horn konzentrieren sich auf die Kanten des Nagels, was an diesen Stellen zu einem schnellen Verbrauch des Hufmaterials führt. Die Folge ist schneller Verschleiß und Lockerung der Bindekräfte zwischen Huf und Nagel bzw. Hufeisen.
2.) Zwischem dem rechteckigen Hufnagel und dem ovalen Loch im Pferdehuf sind zwangsläufig Kanäle vorhanden, in die Straßenschmutz mit allen Mikroorganismen eindringt und sich ungestört sammeln und vermehren kann. Zwar ist dieser Teil des Hufes nicht durchblutet aber die Körperwärme des Tieres und Feuchtigkeit von außen stellen gute Wachstumsbedingungen für Sporen, Pilze, Bakterien usw. dar, die nicht beseitigt werden können.

Durch ein neues Fertigungsverfahren ist es nun möglich, einen einteiligen Hufnagel in großer Stückzahl herzustellen, der einen konischen Schaft mit einem ovalen Querschnitt vereint. Der ovale Querschnitt kann sich auch noch auf den Kopf und die Spitze erstrecken.

Die Vorteile sind:
a.) Die Anpreßkräfte zwischen Nagel und Horn verteilen sich gleichmäßig auf die gesamte Berührungsfläche, was eine bessere Führung bei längerem Bestand zur Folge hat.
b.) Hohlräume, in denen sich ungewünschte Mikroorganismen aufhalten können, sind praktisch nicht mehr vorhanden.

Diese ovale Geometrie der Querschnittsfläche des Hufnagelschaftes ist Gegenstand des hiermit beanspruchten Schutzes. Dabei muß es sich nicht um eine mathematisch exakte Ellipse als Außenkontur handeln, sonder es können auch mehrere verschiedene Segmente verschiedener Ellipsen und/oder Kreissektoren sein. Ebenso können im Übergangsbereich geringe ebene Flächenanteile an elliptische/ovale Oberflächensegmente angrenzen. Wesentlich ist, daß der Querschnitt des Hufnagels nicht mehr ein Recheck darstellt und daß die wesentlichen Grenzflächen zwischen Horn und Hufnagel nicht mehr eben sondern gewölbt sind. Einige Beispiele sind als neuer Querschnitt "b" und "c" im Anhang 1 dargestellt.

Das gilt sinngemäß für alle Hufnägel mit den unterschiedlichesten Köpfen, Spitzen, Größen und Verwendungszwecken.

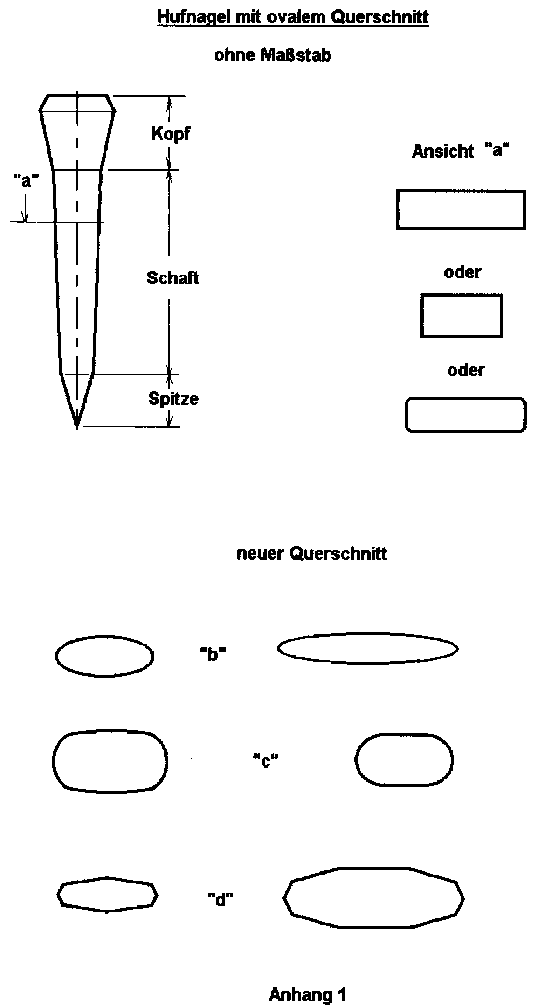

## Patentansprüche

1. Hufnagel, das ist der Nagel zum Befestigen des Hufeisens oder ähnlichem am Huf eines Pferdes, Esels, Ponys oder dergleichen,
dadurch gekennzeichnet,daß
der Nagelschaft, also der mittlere, langgestreckte Teil zwischen Nagelkopf und -spitze einen ovalen, elliptischen oder mit ähnlicher Geometrie versehenen Querschnitt aufweist. Die Oberflächen des Schaftes sind also nicht hauptsächlich eben sondern nach außen gewölbt ( Ansicht "b"und "c", Anhang 1 ).

2. Anspruch nach 1.,
dadurch gekennzeichnet, daß
der Kopf und/oder die Spitze des Hufnagels ebenfalls eine ovale/elliptische oder ähnliche Außenkontur aufweisen können.

3. Anspruch nach 1. und 2.,
dadurch gekennzeichnet, daß
der ovale/elliptische Querschnitt sich ganz oder teilweise über den ganzen, sich zur Spitze hin verjüngenden ( = konisch zulaufenden ) Schaft erstreckt.

4. Anspruch nach 1. bis 3.,
dadurch gekennzeichnet, daß
im Übergangsbereich zwischen zum Beispiel dem ovalen Schaft und einem rechteckigen Nagelkopf / rechteckigen Spitze die Geometrie des Querschnitts eine Art Mischung aus Rechteck und Oval darstellt.

5. Anspruch nach 1. bis 4.,
dadurch gekennzeichnet, daß
die Oberflächen des Schaftes oder gesamten Hufnagels kantig nach außen gewölbt sein können. Das heißt, daß der Querschnitt ein Vieleck ( zum Beispiel Achteck / Zehneck wie Ansicht "d" in Anhang 1 ) darstellt.

6. Anspruch nach 1. bis 5.,
dadurch gekennzeichnet, daß
im Bereich des oberen Schaftes zum unteren Teil des Nagelkopfes besondere Geometrien vorgesehen werden können, damit der ovale Schaft in dem rechteckigen Loch im Hufeisen flächig aufliegt.
